Europäisches Patentamt

European Patent Office

Office européen des brevets

(19)

(11) Veröffentlichungsnummer: **0 213 373**

**A2**

(12) **EUROPÄISCHE PATENTANMELDUNG**

(21) Anmeldenummer: 86110229.1

(22) Anmeldetag: 24.07.86

(51) Int. Cl.⁴: **H04Q 3/42** , H04Q 3/62

(30) Priorität: 21.08.85 DE 3529908

(43) Veröffentlichungstag der Anmeldung:
11.03.87 Patentblatt 87/11

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Vanderbusse, Robert**
**Clementinaplein 2**
**BE-08400 Oostende(BE)**

(54) Verfahren für ein Kommunikationssystem, insbesondere ein Fernsprechnebenstellensystem mit hinsichtlich des Wahlverfahrens unterschiedlichen Gerätetypen als Endeinrichtungen.

(57) Um zu vermeiden, daß bei dem Einsatz unterschiedlichen Gerätetypen der Steuereinrichtung - (ZST) durch ein von den einzelnen Geräten bei ihrer Inanspruchnahme abgegebenes Sonderkennzeichnen der jeweilige Gerätetyp mitgeteilt werden muß, wird bei jeder Eingangsbelegung immer ein Code-Empfänger (CE1) bereitgestellt. Mit dem erstmaligen Erkennen der für ein bestimmtes der verwendeten Wahlverfahren spezifischen Kriterien wird in den Fällen, in denen es sich um das Impulswahlverfahren handelt, die sofortige Abschaltung des Codeempfängers bewirkt. Wird bei der mit Beginn der ersten Zifferninformation durchgeführten Bewertung festgestellt, daß es sich bei der jeweiligen Endeinrichtung um ein Tastwahlgerät handelt, so bleibt der in einem solchen Fall notwendige Codeempfänger weiterhin angeschaltet. Da zunächst ein Codeempfänger bereitgestellt wird, besteht eine Freizügigkeit hinsichtlich der Neuinstallation einer Endeinrichtung oder hinsichtlich einer gewünschten Änderung des Gerätetyps. Es ist nicht erforderlich, für den jeweiligen Gerätetyp das zugrundeliegende Wahlverfahren durch eine betriebstechnische Eingabe festzulegen.

### Verfahren für ein Kommunikationssystem, insbesondere ein Fernsprechnebenstellensystem mit hinsichtlich des Wahlverfahrens unterschiedlichen Gerätetypen als Endeinrichtungen.

Die Erfindung betrifft ein Verfahren für ein Kommunikationssystem, insbesondere ein Fernsprechnebenstellensystem, das von einer ggf. weiteren Teilsteuereinheiten hierarchisch übergeordneten Steuereinrichtung gesteuert wird, die Zugriff zu Speicheranteilen hat, in denen die Programm-und Steuerdateninformationen abgelegt sind und wobei als Teilnehmer-Endeinrichtungen Gerätetypen mit unterschiedlichen Wahlverfahren, wie Impulswahl und Mehrfrequenzcodewahl eingesetzt werden und die Auswertung der von einer Endeinrichtung mit Tastwahl im Mehrfrequenzcodewahlverfahren abgegebenen Wahlinformationen in einem Codeempfänger vorgenommen wird.

In einem Kommunikationssystem, wie es z.B. ein Fernsprechnebenstellensystem darstellt, können Endeinrichtungen eingesetzt werden, die sich in den jeweils zugrundeliegenden Wahlverfahren voneinander unterscheiden. Bei einer mit einer Wählscheibe ausgerüsteten Endeinrichtung werden im sogenannten Impulswahlverfahren die jeweils eingewählten Ziffern durch Schleifenunterbrechungen dargestellt. Dies ist auch bei den sogenannten Pseudo-Tastwahlgeräten der Fall, bei denen zwar eine Tastatur vorhanden ist, die Wahlziffern jedoch aufgrund von Schleifeninterbrechungen gebildet werden. In einem jeder Anschlußleitung zugeordneten Teilnehmersatz beeinflussen die Leitungsunterbrechungen eine darin enthaltene Indikationsschaltung, deren Zustand jeweils wieder durch die Steuereinrichtung feststellbar ist. Um diese Feststellung zu ermöglichen, werden sämtliche Indikationsstellen in bekannter Weise gescannt.

Für die Übertragung der vermittels einer Tastatur eingegebenen Wahlinformationen kann das Mehrfrequenzcode-Wahlverfahren benutzt werden. Bei einer Tastenbetätigung wird mit Hilfe eines entsprechenden Oszillators beispielsweise zweimal ein 1-aus-4-Frequenzcode ausgesendet. Es sind für dieses Beispiel vier Frequenzen einer unteren und vier Frequenzen einer oberen Gruppe zugeordnet. Ein Wählzeichen wird durch die Kombination einer Frequenz aus der unteren Gruppe und einer Frequenz aus der oberen Gruppe dargestellt. Die aufgrund einer solchen Tastwahlmöglichkeit ausgesendeten Wählzeichen werden durch sogenannte Codeempfänger ausgewertet und der festgestellte Ziffernwert der Steuereinrichtung zur weiteren Verarbeitung übergeben. Um die Anschaltung eines solchen Codeempfängers immer dann sicherzustellen, wenn die Belegung durch eine Endeinrichtung mit Tastwahlmöglichkeit erfolgt, muß der Steuereinrichtung die Art der jeweiligen Endeinrichtung bekannt sein. Um dies zu gewährleisten, kann beispielsweise bei der Installation einer Endeinrichtung durch eine entsprechende betriebstechnische Eingabe diese entweder als Tastwahlgerät oder als Impulswahlgerät gekennzeichnet werden. Wird die Anzahl der Endeinrichtungen erweitert oder wird ein Austausch von Endeinrichtungen vorgenommen, die sich im Wahlverfahren unterscheiden, so muß die Wahlart des jeweiligen Gerätes erneut durch eine betriebstechnische Eingabe festgelegt werden. Eine andere Möglichkeit besteht darin, die Endeinrichtungen so auszugestalten, daß sie abhängig vom zugrundeliegenden Wahlverfahren bei einer Benutzung zur Zifferneingabe ein das jeweilige Wahlverfahren charakterisierendes Sonderkennzeichen abgeben. Aufgrund dieses Sonderkennzeichens werden dann die jeweils notwendigen Schritte eingeleitet.

Es ist die Aufgabe der Erfindung, einen freizügigen Einsatz und eine freizügige Änderungsmöglichkeit für Gerätetypen, die sich im Wahlverfahren unterscheiden, zu gewährleisten.

Dies wird dadurch erreicht, daß unabhängig von dem der jeweiligen Endeinrichtung zugeordneten Wahlverfahren bei jeder von ihr ausgehenden Eingangsbelegung immer ein Codeempfänger bereitgestellt wird, daß bei mindestens einem der beiden Wahlverfahren ein es charakterisierendes Kennzeichen jeweils nach dem erstmaligen Erkennen der für dieses Wahlverfahren spezifischen Kriterien gebildet und der Steuereinrichtung übermittelt wird, daß in den Fällen, in denen daraus das Vorliegen der Impulswahlart festgestellt wird, die sofortige Abschaltung des Codeempfängers veranlaßt wird.

Das Kommunikationssystem wird also unter der Annahme projektiert, daß ausschließlich Endeinrichtungen mit Tastwahlmöglichkeit vorhanden sind. Dadurch entfällt die Notwendigkeit, die Endeinrichtungen hinsichtlich der Art des ihr zugrundeliegenden Wahlverfahrens über eine von einer Wartungsperson vorzunehmende betriebstechnische Eingabe festzulegen. Es ist auch keine von der Endeinrichtung ausgehende besondere Maßnahme erforderlich. Es ist aber sichergestellt, daß der Codeempfänger in den Fällen, in denen es sich nicht um ein Tastwahlendgerät handelt in kürzester Zeit abgeschaltet wird. Hierzu wird erfindungsgemäß aus der abgegebenen Wahlinformation die entsprechende Aussage abgeleitet. Es ist sinnvoll, das Abschaltekriterium unmittelbar mit dem Erkennen einer Schleifenunterbrechung zu erzeugen. Tritt innerhalb einer festzulegenden Zeitspanne eine derartige Unterbrechung nicht auf, so handelt es sich um eine Endeinrichtung mit Tastwahlmöglichkeit. In einem solchen Fall bleibt der Codeempfänger zur Auswertung der Mehrfrequenzcode-Wählzeichen weiterhin angeschaltet.

Um eine zusätzliche Zeitüberwachung zu vermeiden, kann man sowohl mit dem Erkennen der Impulsunterbrechung als auch mit dem erstmaligen Erkennen einer Tastwahlinformation ein unterschiedliches Kennzeichen, das den jeweiligen Gerättyp charakterisiert, erzeugen. Dadurch erhält man in jedem Fall eine positive Aussage. Beim Entstehen desjenigen Kennzeichens, das das Impulswahlverfahren charakterisiert, wird die sofortige Abschaltung des Codeempfängers eingeleitet. Beim Auftreten desjenigen Kennzeichens, das die jeweilige Endeinrichtung als eine Endeinrichtung mit Tastwahlmöglichkeit klassifiziert, unterbleibt dann eine solche Abschaltung.

Bei Anlagen, in denen es bereits vorgesehen ist, mit dem erstmaligen Erkennen eines Wählzeichens, das heißt mit dem Erkennen einer Schleifenunterbrechung oder eines Mehrfrequenzcode-Wählzeichens ein zusätzliches Kennzeichen zu erzeugen, kann dieses Zeichen gleichzeitig für die Abschaltung des Codeempfängers in den Fällen herangezogen werden, in denen das Vorliegen eines Impulswahlgerätes erkannt wird. Die ursprüngliche und weiterhin beibehaltene Aufgabe eines solchen Kennzeichens kann beispielsweise darin bestehen, die Abschaltung des Wähltones zu bewirken.

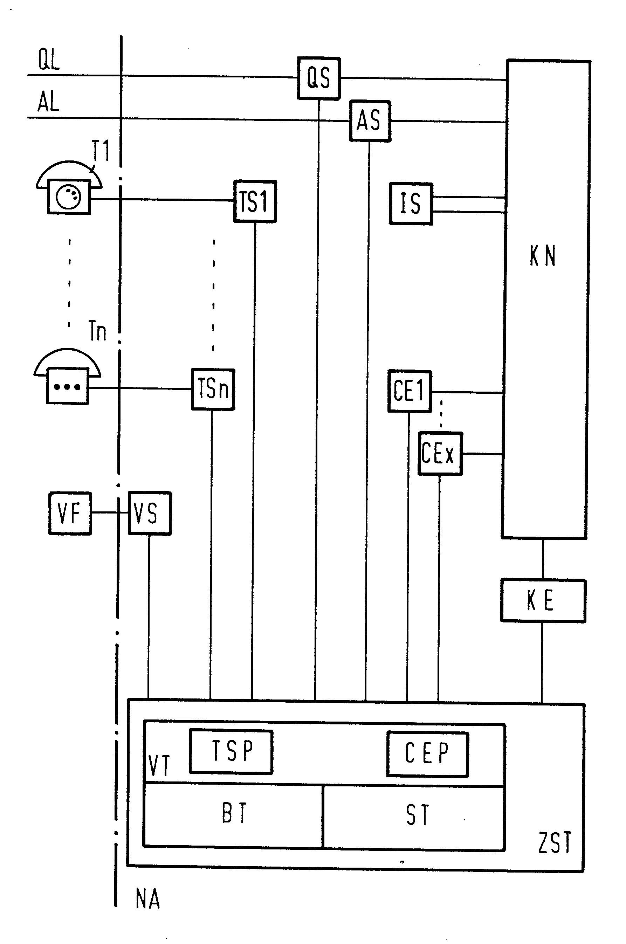

Nachfolgend wird anhand der Zeichnung ein Ausführungsbeispiel der Erfindung beschrieben, das nur die für das Verständnis notwendigen Einzelheiten enthält. Grundsätzlich kann das erfindungsgemäße Verfahren sowohl bei einer volldigitalen als auch bei einer analogen Fernsprechvermittlungsanlage angewendet werden. Das Ausführungsbeispiel zeigt die Anwendung bei einer analogen speicherprogrammierten Fernsprechenbenstellenanlage NA, mit einer digitalen elektronischen Steuerung. Als Teilnehmerendeinrichtungen T1 bis Tn bzw. als Vermittlungsfernsprecher VF können Geräte verwendet werden, die für die Abgabe der Wählzeichen und ggf. von Sonderzeichen entweder für das Impulswahlverfahren oder für das Mehrfrequenzcode-Wahlverfahren ausgelegt sind. Im ersten Fall werden die einzelnen Wählziffern durch Schleifenunterbrechungen aufgrund der Betätigung einer entsprechenden Wählscheibe oder aufgrund der sogenannten Pseudotastwahl abgegeben, während beim Mehrfre quenzcode-Wahlverfahren durch Betätigung von Tasten eine Wählziffer durch die Kombination von mindestens zwei im Hörtonbereich liegenden Frequenzen dargestellt wird. Eine bestimmte Anzahl von Frequenzen sind jeweils einer unteren und einer oberen Gruppe zugeordnet. Das von der Oszillatoranordnung aufgrund einer Tastenbetätigung abgegebene Wählzeichen kann dann beispielsweise durch die Kombination einer Frequenz aus der unteren Gruppe und einer Frequenz aus der oberen Gruppe gebildet werden. Dies gilt dann in gleicher Weise für die Bildung von weiteren Zeichen, die zusätzlichen Tasten zugeordnet sind. Im Ausführungsbeispiel soll jeweils stellvertretend für weitere Teilnehmerstellen die Teilnehmerstelle T1 mit einem nach dem Impulswahlverfahren arbeitenden Wahlorgan und die Teilnehmerstelle Tn mit einem nach dem Mehrfrequenzcode-Wahlverfahren arbeitenden Wahlorgan ausgerüstet sein. Im Grenzfall kann für alle Teilnehmerstellen auch die gleiche Wahlart vorgesehen sein. Bezogen auf die maximal mögliche Anzahl von Teilnehmerstellen kann das Verhältnis von Tastwahlgeräten zu Impulswahlgeräten einen beliebigen Wert annehmen.

Im Ausführungsbeispiel sind die für den Standardverkehr bei einer analogen Nebenstellenanlage vorgesehenen Verbindungssätze, nämlich ein Amtsstatz AS, ein Internsatz IS und ein Querverbindungssatz QS gezeigt. Weiterhin sind Codeempfänger CE1 bis CEx vorhanden, in denen die von einer Tastwahlendeinrichtung abgegebenen Wahlinformationen registriert werden. Die Steuerung dieser genannten peripheren Einheiten kann ggf. von nicht dargestellten Teilsteuereinheiten mit übernommen werden, denen eine zentrale Steuereinrichtung ZST übergeordnet ist. Mit AL ist die zu einem öffentlichen Vermittlungssystem führende Amtsleitung und mit QL die beispielsweise zu einer weiteren Nebenstellenanlage führende Querverbindungsleitung bezeichnet.

Für jede Teilnehmerstelle T1 bis Tn ist ein Teilnehmersatz TS1 bis TSn vorgesehen. Über diesen Satz gelangen die teilnehmerseitig eingegebenen Informationen zu der zentralen Steuereinrichtung ZST. Sie haben Einstellbefehle für die im Teilnehmersatz enthaltenen Funktionsschalter zur Folge. Solche Einstellbefehle werden in gleicher Weise den übrigen Verbindungssätzen übermittelt. Aufgrund einer solchen Einstellinformation wird die Betätigungsart eines Funktionsschalters festgelegt und gleichzeitig der betreffende Funktionsschalter ausgewählt.

Der Einsteller KE hat die Aufgabe, alle Koppelpunkte, die für eine Verbindung im Koppelnetz KN benötigt werden, zu betätigen. Durch die Verbindungssätze werden die für den Aufbau, das Halten und das Auslösen einer Verbindung unmittelbar am Koppelnetz erforderlichen vermittlungstechischen Schaltvorgänge ausgeführt. Die für bestimmte Steuerabläufe notwendigen Programme sind in Speichern, die der zentralen Steuereinrichtung ZST zugehörig bzw. zugänglich ist, enthalten. Die Speichereinheit BT soll beispielsweise die für betriebstechnischen Vorgänge notwendigen Informationen enthalten. In ihr sind z.B. die veränderbaren Kundendaten-Informationen und diejenigen Informationen abgespeichert, die Dienste und Sonderfunktionen der Fernsprechnebenstellenanlage betreffen. Aufgrund der betriebstechnischen Informationen wird die Nebenstellenanlage NA vor ihrer Einschaltung bzw. während des bereits bestehenden Betriebes in einer bestimmten Weise hinsichtlich des Verfahrensablaufes bzw. hinsichtlich der Dienste und Zusatzfunktionen eingerichtet bzw. verändert. Dies betrifft beispielsweise die Zuteilung von Berechtigungen, die Einrichtung von Sonderfunktionen und von Diensten. In der den betriebstechnischen Vorgängen zugeordneten Speichereinheit werden beispielsweise auch die von einem Vermittlungsfernsprecher VF eingegebenen Steuerinformationen aufgenommen. Einem solchen Vermittlungsfern sprecher VF ist der Satz VS zugeordnet. In der Speichereinheit ST sollen die für die Einleitung und für die Durchführung von sicherheitstechnischen Überprüfungen notwendigen Informationen abgespeichert sein. Im Rahmen der sicherheitstechnischen Abläfe können bestimmte Fehler festgestellt werden, wobei die Fehlerfeststellung insbesondere die Steuereinrichtung und das Koppelnetz betrifft.

In der Sspeichereinheit VT sollen diejenigen Informationen abgespeichert sein, die sich auf die Herstellung und auf die Auslösung von vermittlungstechnischen Sprechverbindungen und ggf. von Datenverbindungen beziehen. Es sind also die zur Realisierung der logischen Verknüpfungen und der Abläufe notwendigen Programmabfolgen darin abgespeichert. In einem Arbeitsspeicherteil sind z.B. die Kurzzeitdaten, die den Zustand der Verbindungswege, den Schleifenschluß der Teilnehmeranschlußleitung, die gewählten Ziffern oder Gebühreninformationen betreffen, enthalten. Es werden als Eingangsdaten unter anderem die Zustandsdaten der einzelnen Sprechstellen ermittelt. Durch den vorgenommenen Vergleich der neuen Daten mit den zuletzt abgespeicherten Daten werden Zustandsänderungen erkannt und demzufolge die solchen Änderungen zugeordneten Programme für deren Bearbeitung aufgerufen.

Bei Belegung der Vermittlungseinrichtung durch eine der Teilnehmerstellen T1 bis Tn nun unabhängig von der Wahlart, die der betreffenden Teilnehmerendeinrichtung zugeordnet ist, durch die Steuereinrichtung ein Codeempfänger, z.B. der Codeempfänger CE1, angeschaltet. Hinsichtlich der Codeempfänger wird also die Anlage so ausgelegt, also ob ausschließlich Endeinrichtungen mit Tastwahlmöglichkeit vorhanden wären. Um eine unnötige Belegung der Codeempfänger zu vermeiden, wird der bereitgestellte Codeempfänger immer dann sofort abgeschaltet, wenn bei der jewieligen Endeinrichtung die Wählzeichen nach dem Impulswahlverfahren gebildet werden. Werden die Wählzeichen nach dem Mehrfrequenzcode-Wahlverfahren abgegeben, so bleibt der Codeempfänger bis zum Wahlende angeschaltet. Um dies zu ermöglichen, wird zu dem Zeitpunkt, zu dem frühestens eine Aussage über die betreffende Wahlart möglich ist, ein die betreffende Wahlart kennzeichnendes Signal erzeugt. Die Auswertung dieser unterschiedlichen Signale durch die zentrale Steuereinrichtung ZST hat dann die geschilderten Vorgänge zur Folge. Um zusätzliche Zeitüberwachungen bei dieser Feststellung der Wahlart zu vermeiden, wird für jeder der beiden Wahlarten ein solches Signal abgeleitet, wobei sich die beiden Signale eindeutig voneinander unterscheiden.

Jeder der Teilnehmersätze TS1 bis TSn enthält in nicht dargestellter Weise unter anderem eine Indikationsstelle, die Zustandsänderungen auf der jeweiligen Anschlußleitung erkennt. Diese Indikationsstellen werden durch die zentrale Steuereinrichtung ZST ggf. unter Einbeziehung einer weiteren Steuereinrichtung, die eine gewisse Vorverarbeitung der teilnehmerseitig gelieferten Informationen ermöglicht, abgefragt. Handelt es sich um eine Endeinrichtung, bei der die Wählzeichen vermittels des Impulswahlverfahrens gebildet werden, so können bei dieser Abfrage aufgrund der festzustellenden Unterbrechungen des Schleifenstromes die Wahlziffern erkannt werden. In dem Augenblick, in dem auf diese Weise die erste Schleifenunterbrechung feststellbar ist, wird dasjenige Signal, das auf das Impulswahlverfahren hinweist, erzeugt. Dies kann beispielsweise durch einen in der Programmkomponente TSP enthaltenen und unmittelbar mit dem Erkennen des Impulswahlverfahrens aufgerufenen Funktionsablauf bewirkt werden. Durch diese Programmkomponente können in gleicher Weise wie durch die einer Endeinrichtung mit Tastwahlmöglichkeit zuzuordnenden Programmkomponente die spezifischen Eigenschaften der peripheren Einheiten berücksichtigt werden. Mit der Generierung des für ein Wahlimpulsverfahren signifikanten Signals wird durch zentrale Steuereinrichtung ZST unmittelbar die Abschaltung des für diese betreffende Verbindung bereitgestellten Codeempfängers, z.B. des Codeempfängers CE1 bewirkt. Der belegte Codeempfänger wird also - schnellstmöglichst wieder freigegeben. Nach jeder erkannten Wählziffer wird ein weiteres Signal erzeugt, durch das z.B. die Übergabe an die Wahlbewertung veranlaßt wird. Mit einer erkannten Schleifenunterbrechung wird gleichzeitig ein Zeitglied gestartet, damit Störimpulse unberücksichtigt bleiben und damit gleichzeitig festgestellt werden kann, ob mit der Unterbrechung ein Wahlimpuls gebildet wird, oder ob eine Auslösung bewirkt werden soll. Ist also beispielsweise die Unterbrechungszeit kürzer als die Ablaufzeit des Zeitgliedes, so wird ein Wahlimpuls registriert. Besteht die Unterbrechung noch bei Ablauf des Zeitgliedes, so müßte ausgelöst werden.

Zur Steuerung der Codeempfänger CE1 bis CEx und zur Bewertung der von ihnen abgegebenen Informationen ist eine weitere hardwarenahe Programmkomponente, nämlich die Komponente CEP vorhanden. Sie kann in gleicher Weise wie die Komponente TSP der für die vermittlungstechnischen Abläfe zuständigen Programmeinheit VT als Untereinheit zugehören. Handelt es sich bei der Endeinrichtung, durch die eine Belegung vorgenommen wurde, um ein Gerät mit Mehrfrequenzcodewahl, so wird aufgrund der Auswertung im vorab zugeteilten Codeempfänger, z.B. Codeempfänger CE1, das abgegebene Wählzeichen als Mehrfrequenzcode-Zeichen erkannt. Die entsprechende Information wird dann vermittels der in der Komponente CEP enthaltenen Ablauffolgen zur Bildung des für das Mehrfrequenzcode-Wahlverfahren signifikanten Signals herangezogen. Aufgrund dieses Signals, das also die betreffende Endeinrichtung eindeutig als Tastwahlgerät definiert, wird durch die Steuereinrichtung ZST veranlaßt, daß der Codeempfänger CE1 weiterhin angeschaltet bleibt. Vermittels der im Empfänger enthaltenen Filteranordnung werden die einzelnen Mehrfrequenzcode-Wählzeichen erkannt, und der jeweilige Ziffernwert der Steuereinrichtung übergeben. Nach jeder Ziffer wird in gleicher Weise wie bei der Impuls wahl ein weiteres Signal überzeugt, durch das wiederum die Wahlbewertung angefordert wird. Die Abschaltung des für den Empfang der Mehrfrequenzcode-Wahlzeichen notwendigen Empfängers erfolgt erst, wenn durch die zentrale Steuereinrichtung das Wahlende erkannt wurde.

In einer Wählanlage, in der bereits die Erzeugung der für das jeweilige Wahlverfahren signifikanten Signale vorgesehen ist, um z.B. aufgrund dieser Signale die Abschaltung des Wähltones zu bewirken, können diese Signale zusätzlich in der geschilderten Weise für die weitere Behandlung des jeweils vorab zugeteilten Codeempfängers herangezogen werden.

Bezugszeichenliste

AL Amtsleitung
AS Amtssatz
BT Speichereinheit
CE1./.CE Codeempfänger
CEP Speichereinheit
IS Internsatz
KN Koppelnetz
KE Koppelnetzeinsteller
NA Nebenstellenanlage
QL Querverbindungsleitung
QS Querverbindungssatz
ST Speicherplatz
T1./.Tn Teilnehmerstelle
TS1-TSn Teilnehmersatz
TSP Speichereinheit
VF Vermittlungsfernsprecher
VS Satz
VT Speichereinheit
ZST zentrale Steuerrechnereinheit

**Ansprüche**

1. Verfahren für ein Kommunikationssystem, insbesondere für ein Fernsprechnebenstellensystem, das von einer ggf. weiteren Teilsteuereinheiten hierarchisch übergeordneten Steuereinrichtung gesteuert wird, die Zugriff zu Speicheranteilen hat, in denen die Programm-und Steuerdateninformationen abgelegt sind und wobei als Teilnehmer-Endeinrichtungen Gerätetypen mit unterschiedlichem Wahlverfahren, wie Impulswahl und Mehrfrequenzcodewahl eingesetzt werden und die Auswertung der von einer Endeinrichtung mit Tastwahl im Mehrfrequenzcodewahlverfahren abgegebenen Wahlinformationen in einem Codeempfänger vorgenommen wird, **dadurch gekennzeichnet,** daß unabhängig von dem der jeweiligen Endeinrichtung (T1, Tn) zugeordneten Wahlverfahren bei jeder von ihr ausgehenden Eingangsbelegung immer ein Codeempfänger (CE1) bereitgestellt wird, daß bei mindestens einem der beiden Wahlverfahren ein es charakterisierendes Kennzeichen jeweils nach dem erstmaligen Erkennen der für dieses Wahlverfahren spezifischen Kriterien gebildet und der Steuereinrichtung (ZST) übermittelt wird, daß in den Fällen, in denen daraus das Vorliegen der Impulswahlart festgestellt wird, die sofortige Abschaltung des Codeempfängers (CE1) veranlaßt wird.

2. Verfahren nach Anspruch 1, **dadurch gekennzeichnet,** daß bei jedem Wahlverfahren ein es charakterisierendes Kennzeichen gebildet wird.

3. Verfahren nach Anspruch 1 oder 2, **dadurch gekennzeichnet,** daß bei Kommunikationssystemen, bei denen bereits mit dem erstmaligen Erkennen eines Wahlzeichens ein die betreffende Wahlart charakterisierendes Kennzeichen für andere Zwecke, z.B. für die Abschaltung eines Wähltones erzeugt wird, dieses Kennzeichen zu satzlich für die Abschaltung des Codeempfängers in den Fällen herangezogen wird, in denen damit das Vorliegen eines Impulswahlverfahrens erkannt wird.

0 213 373